# EUROPÄISCHE PATENTSCHRIFT

(11) **EP 1 936 252 B1**
(45) Veröffentlichungstag und Bekanntmachung des Hinweises auf die Patenterteilung: **13.01.2010**
(21) Anmeldenummer: 07120953.0
(22) Anmeldetag: 19.11.2007
(51) Int. Cl.: F16L 37/12

(54) **Anschlussvorrichtung für Medienleitungen**
Connector device for media lines
Dispositif de liaison pour lignes de milieux

(30) Priorität: 21.12.2006 DE 202006019311 U
(43) Veröffentlichungstag der Anmeldung: 25.06.2008
(73) Patentinhaber: Voss Automotive GmbH, 51688 Wipperfürth (DE)
(72) Erfinder: Lechner, Martin, 51789 Lindlar-Frielingsdorf (DE); Zenses, Frank, 50354 Hürth (DE)
(74) Vertreter: Patentanwälte Dr. Solf & Zapf

(56) Entgegenhaltungen:
- DE-C- 134 088
- DE-C- 624 858
- GB-A- 575 397
- US-A- 1 352 494
- US-A- 3 074 746
- US-A- 4 421 137

## Beschreibung

Die vorliegende Erfindung betrifft eine Anschlussvorrichtung zum Anschluss mindestens einer Medienleitung (Rohr- oder Schlauchleitung für pneumatische oder hydraulische Medien) an ein - im Grunde beliebiges - Aufnahmeteil, wie z. B. ein Aggregateteil oder ein weiteres Leitungsanschlussteil, bestehend aus einem mit einem Einsetzabschnitt umfangsgemäß mediendicht abgedichtet axial in eine zylindrische oder schwach konische Anschlussöffnung des Aufnahmeteils einsetzbaren und über Haltemittel gegen axiales Lösen arretierbaren Anschlussteil, wobei der Einsetzabschnitt als Haltemittel einen Klemmring trägt, der mit dem Einsetzabschnitt derart zusammenwirkt, das er durch eine zwischen Einsetzabschnitt und Klemmring auftretende axiale Relativbewegung radial spreizbar ist und zur axialen Arretierung kraft-und/oder formschlüssig radial gegen die Anschlussöffnung wirkt.

Eine derartige Anschlussvorrichtung ist in der WO 2005/073612 A1 beschrieben. Bei dem bekannten Anschlussteil ist der Klemmring in einer äußeren Umfangsnut des Einsetzabschnittes angeordnet, wobei die Umfangsnut einen Konusbereich mit in Einsetzrichtung zunehmendem Durchmesser aufweist. In einem tiefsten Nutbereich mit kleinstem Durchmesser ist ein Federelement angeordnet, um den Klemmring axial in Richtung des Konusbereichs zu drücken und dadurch ein Spreizen des Klemmrings zu bewirken. Die Arretierung ist somit allein von der Funktion des Federelementes abhängig und deshalb nicht in allen Fällen optimal. Durch die Ausgestaltung des Konusbereichs der Umfangsnut handelt es sich um eine unlösbare Verbindung, weil durch eine Herausziehbewegung über den Konusbereich der Klemmring gespreizt wird, wodurch er sich fest in der Anschlussöffnung verkrallt.

Die WO 2004/029497 A1 beschreibt einige Ausführungen einer Anschlussvorrichtung (Figuren 11 bis 18), wobei ein Anschlussteil (Gehäuseteil) mit einem Einsteckabschnitt als Einpresspatrone in eine Aggregate-Anschlussöffnung einsetzbar ist. Hierbei weist der Einsteckabschnitt auf seinem Umfang als Haltemittel Zahnelemente zum form-oder kraftformschlüssigen Eingriff in die Anschlussöffnung auf. Die Montage erfolgt durch axiales Einpressen. Die Verbindung ist unlösbar, sofern nicht die Zahnelemente derart gewindeartig ausgebildet sind, dass der Einsteckabschnitt durch Herausschrauben aus der Anschlussöffnung entnehmbar ist. Dabei kann es allerdings zu Beschädigungen insbesondere im Innenumfangsbereich der Anschlussöffnung kommen.

Der vorliegenden Erfindung liegt die Aufgabe zu Grunde, eine Anschlussvorrichtung der beschriebenen Art so zu verbessern, dass eine optimale Arretierung des Anschlussteils in der jeweiligen Anschlussöffnung in allen Fällen sichergestellt werden kann. Zudem soll vorzugsweise das Anschlussteil auch jederzeit wieder beschädigungsfrei lösbar sein.

Erfindungsgemäß wird dies durch die Merkmale des Anspruchs 1 erreicht. Vorteilhafte Ausgestaltungsmerkmale sind Gegenstand der abhängigen Ansprüche.

Erfindungsgemäß wirkt demnach der Klemmring unmittelbar mit dem Einsetzabschnitt über Zwangssteuermittel derart zusammen, dass die axiale Relativbewegung zum Spreizen des Klemmrings durch eine Verdrehung des Einsetzabschnittes relativ zu dem Klemmring bewirkt wird. Dies bedeutet, dass der Klemmring durch manuelles Verdrehen des Anschlussteils um die Einsteckachse sehr fest radial verspannt werden kann, so dass der Anwender spürbar sicherstellen kann, dass eine feste Arretierung des Einsetzabschnittes in der Anschlussöffnung gewährleistet ist.

Nun ist zwar das Halteprinzip, wobei ein Klemmelement radial gespreizt wird, grundsätzlich bekannt. Allerdings erfolgt das Spreizen üblicherweise mittelbar durch Drehung eines zusätzlichen Spannelementes. So beschreibt beispielsweise die GB 575 397 A einen "Teststecker für Rohre", wobei eine Spannschraube mit einer manuell zu verdrehenden Flügelmutter vorgesehen ist. Die US 3 074 746 A beschreibt einen "Spreizadapter" nach Art einer Klemmbacke (jaw-type expansion adapter), die ebenfalls eine zentrische Spannschraube aufweist. Schließlich betrifft die DE 134 088 C einen Verschlußstopfen für Rohrmündungen, der auch mit einem zentrischen Schraubenbolzen verspannt wird.

Im Gegensatz dazu braucht erfindungsgemäß nur das Anschlussteil selbst mit seinem Einsetzabschnitt relativ zu dem Klemmring verdreht zu werden, um über die Zwangssteuermittel den Klemmring zu spreizen. Es erübrigen sich daher zusätzliche Spannmittel, wie Spannschrauben oder dergleichen.

Um sicherzustellen, dass beim Verdrehen des Anschlussteils sich nicht auch der Klemmring mit dreht, weist der Klemmring bevorzugt auf seinem Außenumfang Mittel zur Verdrehhemmung in der Anschlussöffnung auf. Diese Mittel bewirken, dass ein äußerer Kraft-und/oder Formschluss zwischen Klemmring und Anschlussöffnung stets größer als ein innerer Kraft-und/oder Formschluss zwischen Klemmring und Einsetzabschnitt ist. Dadurch lässt sich der Einsetzabschnitt innerhalb des Klemmrings verdrehen, ohne dass Letzterer innerhalb der Anschlussöffnung mit verdreht wird, so dass die erforderliche Relativverdrehung stets sichergestellt ist.

Das Anschlussteil kann vorteilhafterweise aus seiner in der Anschlussöffnung arretierten Stellung auch wieder einfach und beschädigungs- bzw. zerstörungsfrei gelöst werden, indem der Einsetzabschnitt gegen die zum Spannen vorgesehene Drehrichtung zurück verdreht und dadurch die radiale Verspannung des Klemmrings gelöst wird. Der Klemmring kann auch derart über eine Gewindeverbindung mit dem Einsetzabschnitt verbunden sein, dass der Einsetzabschnitt durch Herausschrauben gelöst und entnommen werden kann.

Anhand von einigen in der Zeichnung veranschaulichten, bevorzugten Ausführungsbeispielen soll die Erfindung im Folgenden genauer erläutert werden. Dabei zeigen:
- Fig. 1: einen axialen Schnitt (vergleiche dazu die Schnittebene I-I in Fig. 7) einer ersten Ausführungsform einer erfindungsgemäßen Anschlussvorrichtung mit einem Klemmring in einer einsetzbereiten Vormontagestellung,
- Fig. 2: eine Ausschnittvergrößerung des Bereichs II in Fig. 1,
- Fig. 3: einen axialen Schnitt (vergleiche dazu die gewinkelte Schnittlage III-III in Fig. 7) der Anschlussvorrichtung gemäß Fig. 1 in einem in eine Anschlussöffnung eines Aufnahmeteils eingesetzten Zustand (Betriebsstellung),
- Fig. 4: eine Ausschnittvergrößerung des Bereichs IV in Fig. 3,
- Fig. 5: eine Ausschnittvergrößerung des Bereichs V in Fig. 3,
- Fig. 6: eine gesonderte Perspektivansicht des Klemmrings in der Ausführung gemäß Fig. 1 bis 5,
- Fig. 7: eine Draufsicht des Klemmrings in Pfeilrichtung VII gemäß Fig. 6,
- Fig. 8: eine Perspektivansicht analog zu Fig. 6 einer alternativen Ausgestaltung des Klemmrings,
- Fig. 9: eine zweite Ausführungsform der erfindungsgemäßen Anschlussvorrichtung in einer Darstellung ähnlich Fig. 1 (Vormontagestellung),
- Fig. 10: eine Ausschnittvergrößerung des Bereichs X in Fig. 9,
- Fig. 10a: eine Ansicht wie in Fig. 10 in einer Ausführungsvariante der Anschlussvorrichtung,
- Fig. 11: die Anschlussvorrichtung gemäß Fig. 9 in einer Darstellung analog zu Fig. 3 (Betriebsstellung),
- Fig. 12: eine Ausschnittvergrößerung des Bereichs XII in Fig. 11,
- Fig. 13: eine Perspektivansicht des Klemmrings in der Ausführung gemäß Fig. 9 bis 12,
- Fig. 14: eine Draufsicht in Pfeilrichtung XIV gemäß Fig. 13,
- Fig. 15: eine dritte Ausführungsform der erfindungsgemäßen Anschlussvorrichtung in der Betriebsstellung analog zu Fig. 3 und 11,
- Fig. 16: eine Ausschnittvergrößerung des Bereichs XVI in Fig. 15,
- Fig. 17: eine Perspektivansicht des Klemmrings zur Ausführung gemäß Fig. 15 und 16,
- Fig. 18: eine Draufsicht des Klemmrings in Pfeilrichtung XVIII gemäß Fig. 17,
- Fig. 19: eine vierte Ausführungsform der erfindungsgemäßen Anschlussvorrichtung in der Vormontagestellung ähnlich Fig. 1,
- Fig. 20: eine Ausschnittvergrößerung des Bereichs XX in Fig. 19,
- Fig. 21: die Anschlussvorrichtung gemäß Fig. 19 in der Betriebsstellung,
- Fig. 22: eine Ausschnittvergrößerung des Bereichs XXII in Fig. 21,
- Fig. 23: eine Perspektivansicht des Klemmrings zur Ausführung gemäß Fig. 19 bis 22 und
- Fig. 24: eine Draufsicht des Klemmrings in Pfeilrichtung XXIV gemäß Fig. 23.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugzeichen ebenfalls zu erkennen ist.

Eine erfindungsgemäße Anschlussvorrichtung 1 dient zum Anschluss (mindestens) einer nicht dargestellten Medienleitung an ein beliebiges Aufnahmeteil 2, wie ein hydraulisches oder pneumatisches Aggregateteil (beispielsweise Druckmittelquelle [Pumpe] oder Druckmitteltank), oder auch ein anderes Leitungsanschlussteil. Das Aufnahmeteil 2 weist für diesen Anschluss eine Anschlussöffnung 4 auf, die als einfache, glattwandige Bohrung im Wesentlichen zylindrisch oder gegebenenfalls schwach konisch ausgebildet ist. Die Bohrung bedarf keiner speziellen Bearbeitung, so dass von einer "Rohbohrung" gesprochen werden kann.

Dazu besteht nun die erfindungsgemäße Anschlussvorrichtung 1 aus einem adapterartigen Anschlussteil 6, welches mit einem einendigen Einsetzabschnitt 8 axial in die Anschlussöffnung 4 einsetzbar (einsteckbar) und über Haltemittel gegen axiales Lösen arretierbar ist. Zur umfangsgemäßen, mediendichten Abdichtung weist der Einsetzabschnitt 8 mindestens einen Dichtabschnitt auf, wie dargestellt z. B. einen in einer Ringnut 10 sitzenden Dichtring 12. Es kann auch (mindestens) ein ringförmig aufgeformter (z. B. angespritzter) Dichtabschnitt vorgesehen sein. Weiterhin trägt der Einsetzabschnitt 8 als Haltemittel einen Klemmring 14, der mit dem Einsetzabschnitt 8 derart zusammenwirkt, dass er durch eine zwischen Einsetzabschnitt 8 und Klemmring 14 auftretende axiale Relativbewegung zumindest bereichsweise radial spreizbar ist und dadurch zur Arretierung kraft-und/oder formschlüssig radial nach außen gegen die im Wesentlichen glattwandige Innenfläche der Anschlussöffnung 4 wirkt. Anderendig, dem Einsetzabschnitt 8 gegenüberliegend weist das Anschlussteil 6 mindestens einen Leitungsanschluss 16 auf. In den dargestellten Ausführungen ist der/jeder Leitungsanschluss 16 als Schlauch-/Rohrstutzen zum Aufstecken der Leitung ausgebildet. In einer nicht dargestellten Alternative kann auch ein Steckanschluss zum Einstecken der Leitung mit beliebiger Arretierung, z. B. als Klemm- oder Schneidring-Verschraubung, vorgesehen sein. Auf diese Weise bildet das Anschlussteil 6 einen Anschluss-Adapter zum druckdichten und arretierten Leitungsanschluss an die einfache Anschlussöffnung 4 des jeweiligen Aufnahmeteils 2.

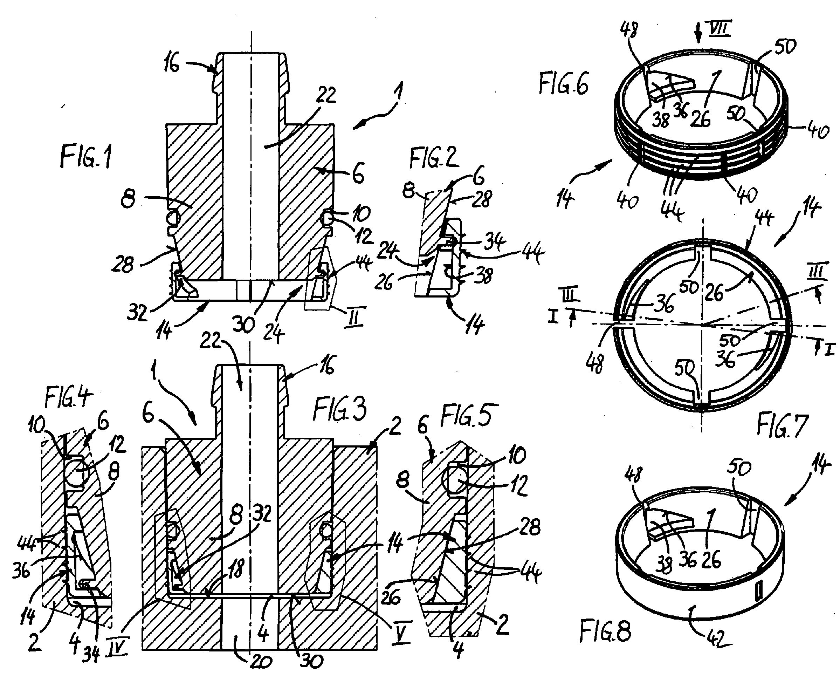

Wie sich noch aus den Fig. 3, 11,15 und 21 ergibt, kann die Anschlussöffnung 4 des Aufnahmeteils 2 über eine Bohrungsstufe 18 in einen im Querschnitt (Durchmesser) reduzierten Kanal 20 übergehen. Das erfindungsgemäße Anschlussteil 6 weist ebenfalls einen Durchgangskanal 22 auf, der im Querschnitt (Durchmesser) dem Kanal 20 entsprechen kann. Allerdings ist eine solche Ausführung des Aufnahmeteils 2 mit der Bohrungsstufe 18 für die Haltefunktion der erfindungsgemäßen Anschlussvorrichtung 1 nicht von Bedeutung. Dies bedeutet, dass die erfindungsgemäße Anschlussvorrichtung 1 auch für stufenfreie, mit im Wesentlichen gleichem Querschnitt (Durchmesser) durchgehende Anschlussöffnungen 4 geeignet ist.

Erfindungsgemäß ist vorgesehen, dass der Einsetzabschnitt 8 direkt, d. h. unmittelbar mit dem Klemmring 14 über Zwangssteuermittel 24 derart zusammenwirkt, dass die axiale Relativbewegung zum Spreizen des Klemmrings 14 durch eine von außen insbesondere manuell aufgezwungene Drehung des Einsetzabschnittes 8 relativ zu dem Klemmring 14 bewirkt wird. Hierzu weist der Klemmring 14 vorzugsweise auf seinem Außenumfang geeignete Mittel zur Verdrehhemmung in der Anschlussöffnung 4 auf. Dadurch lässt sich der Einsetzabschnitt 8 innerhalb des Klemmrings 14 verdrehen, ohne dass Letzterer innerhalb der Anschlussöffnung 4 mit verdreht wird.

Der Klemmring 14 weist einen Innenkonus 26 auf, der zum Spreizen mit einem Außenkonus 28 des Einsetzabschnittes 8 zusammenwirkt. Hierbei sind der Innenkonus 26 und der Außenkonus 28 mit in Einsetzrichtung zum freien vorderen Stirnende 30 des Einsetzabschnittes 8 hin abnehmendem Querschnitt (Durchmesser) ausgebildet. Dadurch bewirkt eine axiale Bewegung des Einsetzabschnittes 8 in Einsetzrichtung relativ zu dem Klemmring 14 ein Spreizen des Klemmrings 14. Eine umgekehrte axiale Relativbewegung des Einsetzabschnittes 8 in Löserichtung bewirkt eine radiale Entspannung des Klemmrings 14, wodurch eine Lösbarkeit der Anschlussvorrichtung 1 gegeben ist.

Im Folgenden sollen die verschiedenen Ausführungsformen genauer erläutert werden.

Bei der Ausführung gemäß Fig. 1 bis 8 sind die unmittelbar zwischen dem Klemmring 14 und dem Einsetzabschnitt 8 des Anschlussteils 6 vorgesehenen Zwangssteuermittel 24 als Nockensteuerung 32 ausgebildet, wobei der Einsetzabschnitt 8 im Bereich des Außenkonus 28 zwei diametral gegenüberliegende, radial vorstehende Nocken 34 (siehe insbesondere Fig. 2 und 4) aufweist. Der Klemmring 14 weist im Bereich des Innenkonus 26 für jeden Nocken 34 eine rampenartig schräg verlaufende Nockenbahn 36 auf, die durch eine taschenartige Ausnehmung 38 gebildet ist (siehe hierzu insbesondere Fig. 6 und 8). Ein Verdrehen des Einsetzabschnittes 8 relativ zu dem Klemmring 14 bewirkt über die sich über die Nockenbahnen 36 bewegenden Nocken 34 die zum Spreizen des Klemmrings 14 erforderliche axiale Relativbewegung des Einsetzabschnittes 8. Die oben erwähnten Mittel zur Verdrehhemmung sind bei der Ausführung des Klemmrings 14 gemäß Fig. 6 und 7 auf dem Außenumfang durch mehrere radial vorspringende und etwa axial verlaufende Rippen 40 gebildet. Bei der alternativen Ausführung gemäß Fig. 8 weist der Klemmring 14 auf seiner im Wesentlichen glatten Außenumfangsfläche eine vorzugsweise elastomere Reibungsbeschichtung 42 auf, die einerseits die gewünschte Verdrehhemmung, andererseits aber auch in der Betriebsstellung eine kraftschlüssige Arretierung des Anschlussteils 6 in der Anschlussöffnung 4 bewirkt. Bei der Ausführung des Klemmrings 14 gemäß Fig. 1 bis 7 weist der Klemmring 14 auf seinem Außenumfang eine kraft- und/oder formschlüssig gegen die Anschlussöffnung 4 wirkende Verzahnung 44 auf. Dazu wird insbesondere auf die Fig. 4 und 5 verwiesen.

Bei allen übrigen Ausführungsformen sind die Zwangssteuermittel 24 als Gewindeverbindung 46 unmittelbar zwischen dem Einsetzabschnitt 8 und dem Klemmring 14 gebildet.

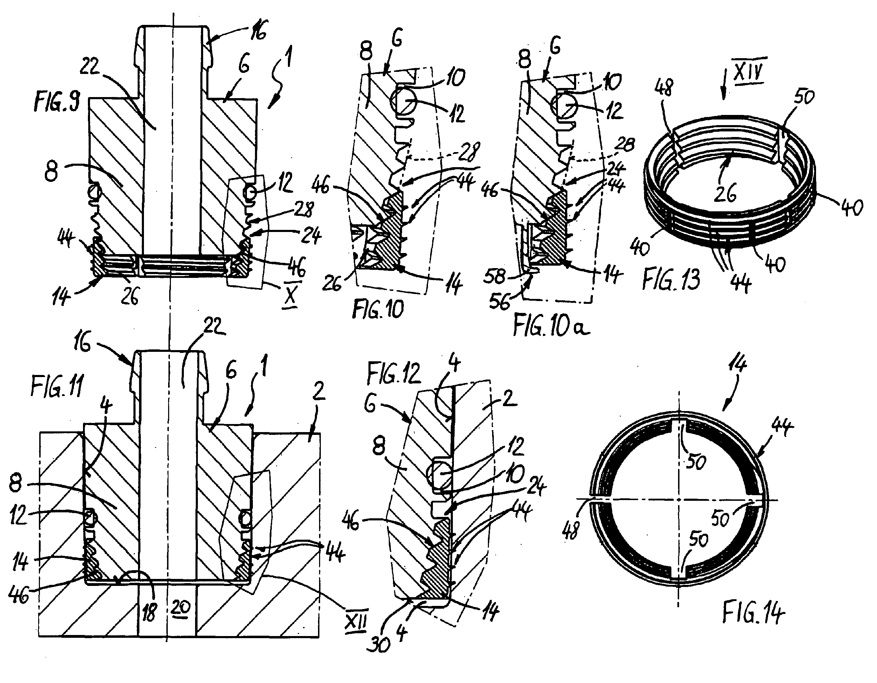

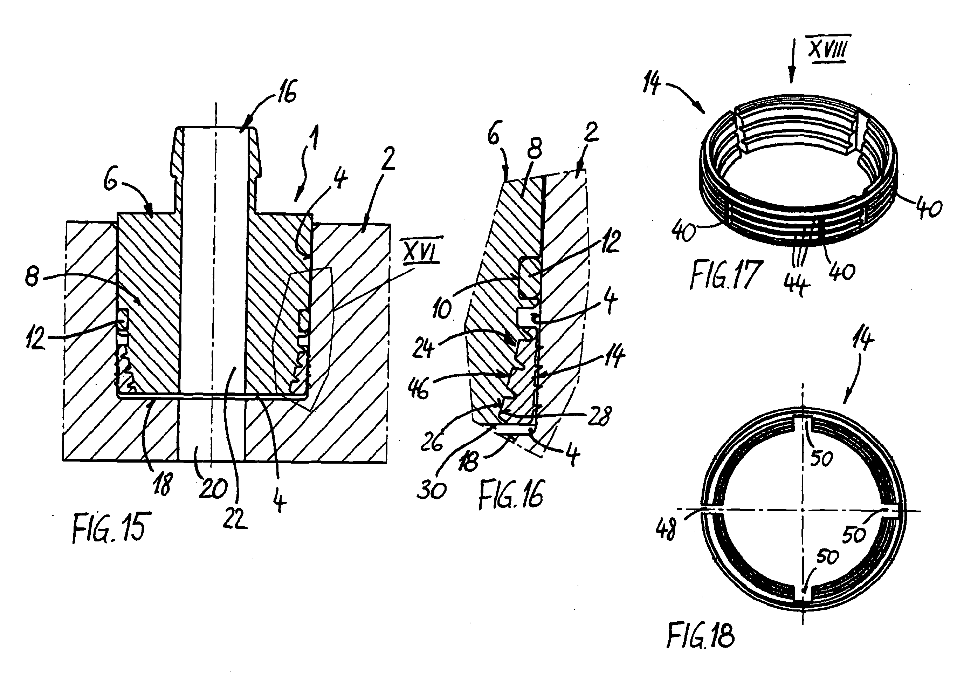

Bei den Ausführungen gemäß Fig. 9 bis 14 und Fig. 15 bis 18 ist jeweils die Gewindeverbindung 46 als Konusgewinde im Bereich des Innenkonus 26 des Klemmrings 14 und des Außenkonus 28 des Einsetzabschnittes 8 ausgebildet. Gemäß Fig. 9 bis 14 handelt es sich beispielhaft um ein metrisches Konusgewinde und gemäß Fig. 15 bis 18 um ein konisches Trapezgewinde.

Durch eine spezielle Ausgestaltung der Gewindeverbindung 46 kann eine Selbsthemmung der Verbindung erreicht und beeinflusst werden.

Bei allen Ausführungen gemäß Fig. 1 bis 18 weist der Klemmring 14 an einer Stelle seines Umfangs einen durchgehenden Schlitz 48 auf. Dadurch ist der Klemmring 14 radial elastisch verformbar. Die Verformbarkeit kann noch durch weitere Schwächungsstellen 50 verbessert werden, indem durch Schwächung des Ringquerschnittes Verformungsgelenke gebildet werden. Hierzu wird insbesondere auf die Draufsichten in den Fig. 7, 14 und 18 verwiesen.

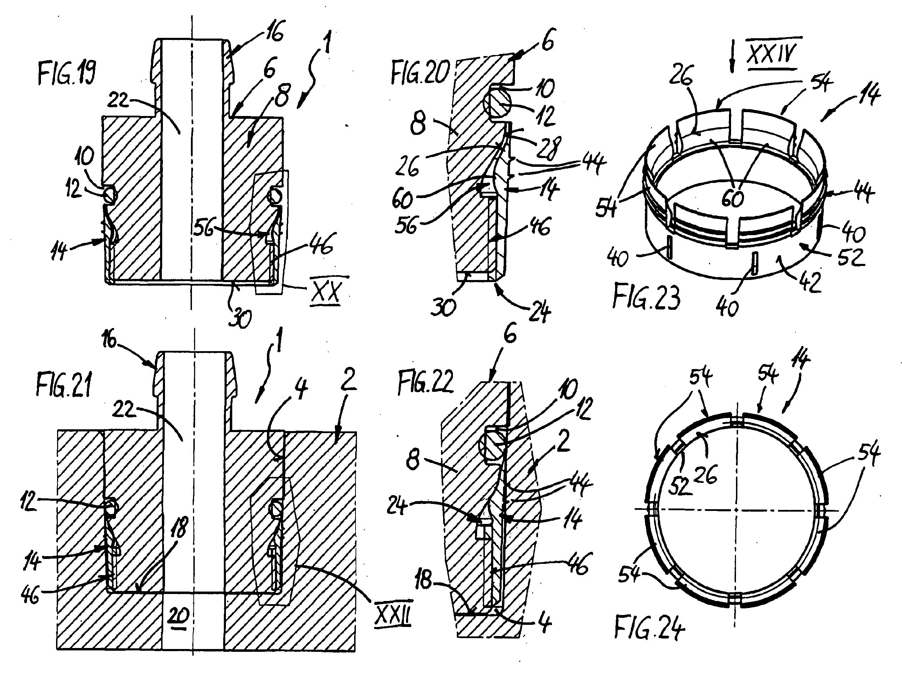

Die Ausführung gemäß Fig. 19 bis 24 unterscheidet sich von den übrigen Ausführungen dadurch, dass die Gewindeverbindung 46 als (z. B. metrisches) Zylindergewinde in einem gegenüber dem Innenkonus 26 des Klemmrings 14 und dem Außenkonus 28 des Einsetzabschnittes 8 axial - bevorzugt in Richtung des freien Stirnendes 30 - versetzten Bereich liegt. Außerdem ist der Klemmring 14 kronenartig ausgebildet; er besteht aus einem umfangsgemäß durchgehenden, ungeschlitzten Ringabschnitt 52 und mehreren (z. B. wie dargestellt acht), sich axial erstreckenden, über den Ringumfang verteilten und radial verformbaren Klemmabschnitten 54, die innen den Innenkonus 26 und außen die Verzahnung 44 aufweisen.

Vor allem für die Ausführungen, bei denen der Klemmring 14 mit der äußeren Verzahnung 44 ausgestattet ist, ist der Klemmring 14 bevorzugt aus einem Material ausgebildet, welches relativ zu dem Material des Aufnahmeteils 2 härter ausgebildet ist. Dadurch können Zahnkanten der Verzahnung 44 kraftformschlüssig oder sogar formschlüssig in die Anschlussöffnung 4 eingreifen. Bei der in Fig. 8 dargestellten Ausführung kann der Klemmring 14 auch aus einem relativ weichen, elastischen Material bestehen.

In weiterer vorteilhafter Ausgestaltung der Erfindung ist der Klemmring 14 in seiner Vormontagestellung verliersicher vorfixiert. Dazu können spezielle Haltemittel 56 vorgesehen sein. Wie beispielhaft in Fig. 10a dargestellt ist, können diese Haltemittel 56 durch einen Ringkragen 58 des Einsetzabschnittes 8 gebildet sein, wobei der Ringkragen 58 den Klemmring 14 auf dessen radial nach innen weisender Seite axial und radial untergreift. Der Ringkragen 58 kann nach Vormontage des Klemmrings 14 umgebördelt werden oder bereits zuvor eine umlaufende Kante besitzen. Bei der Ausführung gemäß Fig. 19 bis 24 sind die Haltemittel 56 durch radial nach innen vorspringende Bereiche 60 der Klemmabschnitte 54 des Klemmrings 14 gebildet, wobei die vorspringenden Bereiche 60 in der Vormontagestellung (siehe insbesondere Fig. 20) in den Bereich axial zwischen der Gewindeverbindung 46 und dem Außenkonus 28 des Einsetzabschnittes 8 eingreifen. Dadurch ist der Klemmring gegen Lösen durch ungewolltes, selbsttätiges Abschrauben fixiert. Die vorspringenden Bereiche 60 können - wie dargestellt - im Axialschnitt gesehen konvex gewölbt oder aber stufenförmig ausgebildet sein.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die in dem/jedem unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Anschlussvorrichtung (1) zum Anschluss mindestens einer Medienleitung an ein Aufnahmeteil (2), bestehend aus einem mit einem Einsetzabschnitt (8) umfangsgemäß abgedichtet axial in eine zylindrische oder schwach konische Anschlussöffnung (4) des Aufnahmeteils (2) einsetzbaren und über Haltemittel gegen axiales Lösen arretierbaren Anschlussteil (6), wobei der Einsetzabschnitt (8) als Haltemittel einen Klemmring (14) trägt, der mit dem Einsetzabschnitt (8) derart zusammenwirkt, dass er durch eine zwischen Einsetzabschnitt (8) und Klemmring (14) auftretende axiale Relativbewegung radial spreizbar ist und zur axialen Arretierung kraft- und/oder formschlüssig radial gegen die Anschlussöffnung (4) wirkt,
**dadurch gekennzeichnet, dass** der Klemmring (14) unmittelbar mit dem Einsetzabschnitt (8) über Zwangssteuermittel (24) derart zusammenwirkt, dass die axiale Relativbewegung zum Spreizen des Klemmrings (14) durch eine Verdrehung des Einsetzabschnittes (8) relativ zu dem Klemmring (14) bewirkt wird.

2. Anschlussvorrichtung nach Anspruch 1,
**dadurch gekennzeichnet, dass** der Klemmring (14) auf seinem Außenumfang Mittel zur Verdrehhemmung in der Anschlussöffnung (4) aufweist.

3. Anschlussvorrichtung nach Anspruch 1 oder 2,
**dadurch gekennzeichnet, dass** die direkt zwischen dem Einsetzabschnitt (8) und dem Klemmring (14) vorgesehenen Zwangssteuermittel (24) als Gewindeverbindung (46) ausgebildet sind.

4. Anschlussvorrichtung nach Anspruch 1 oder 2,
**dadurch gekennzeichnet, dass** die direkt zwischen dem Einsetzabschnitt (8) und dem Klemmring (14) vorgesehenen Zwangssteuermittel (24) als Nockensteuerung (26) ausgebildet sind.

5. Anschlussvorrichtung nach einem der Ansprüche 1 bis 4,
**dadurch gekennzeichnet, dass** der Klemmring (14) einen Innenkonus (26) aufweist, der zum Spreizen mit einem Außenkonus (28) des Einsetzabschnittes (8) zusammenwirkt.

6. Anschlussvorrichtung nach Anspruch 5,
**dadurch gekennzeichnet, dass** der Innenkonus (26) des Klemmrings (14) und der Außenkonus (28) des Einsetzabschnittes (8) mit in Einsetzrichtung zu einem freien vorderen Stirnende (30) des Einsetzabschnittes (8) hin abnehmenden Durchmessern ausgebildet sind.

7. Anschlussvorrichtung nach Anspruch 3 und 5 oder nach Anspruch 3 und 6,
**dadurch gekennzeichnet, dass** die Gewindeverbindung (46) als Konusgewinde im Bereich des Innenkonus (26) des Klemmrings (14) und des Außenkonus (28) des Einsetzabschnittes (8) vorgesehen ist.

8. Anschlussvorrichtung nach Anspruch 3 und 5 oder nach Anspruch 3 und 6,
**dadurch gekennzeichnet, dass** die Gewindeverbindung (46) als - beispielsweise metrisches - Zylindergewinde in einem gegenüber dem Innenkonus (26) des Klemmrings (14) und dem Außenkonus (28) des Einsetzabschnittes (8) axial - bevorzugt in Richtung des freien Stirnendes (30) - versetzten Bereich liegt.

9. Anschlussvorrichtung nach einem der Ansprüche 4 bis 6,
**dadurch gekennzeichnet, dass** die Nockensteuerung (32) aus mindestens einem - insbesondere auf der Seite des Einsetzabschnittes (8) angeordneten - radialen Nocken (34) und mindestens einer diesem zugeordneten - insbesondere innenseitig in dem Klemmring (14) gebildeten - rampenartig schräg verlaufenden Nockenbahn (36) besteht.

10. Anschlussvorrichtung nach einem der Ansprüche 2 bis 9,
**dadurch gekennzeichnet, dass** die Mittel zur Verdrehhemmung durch mindestens eine radial vorspringende und etwa axial verlaufende Rippe (40) und/oder durch eine äußere, vorzugsweise elastomere Reibungsbeschichtung (42) gebildet sind.

11. Anschlussvorrichtung nach einem der Ansprüche 1 bis 10,
**dadurch gekennzeichnet, dass** der Klemmring (14) auf seinem Außenumfang eine kraft- und/oder formschlüssig gegen die Anschlussöffnung (4) wirkende Verzahnung (44) aufweist.

12. Anschlussvorrichtung nach einem der Ansprüche 1 bis 11,
**dadurch gekennzeichnet, dass** der Klemmring (14) auf seinem Außenumfang für eine kraftschlüssige Arretierung in der Anschlussöffnung (4) eine Reibungsbeschichtung (42) aufweist.

13. Anschlussvorrichtung nach einem der Ansprüche 1 bis 12,
**dadurch gekennzeichnet, dass** der Einsetzabschnitt (8) zur umfangsgemäßen Abdichtung mindestens einen Dichtabschnitt - insbesondere mindestens einen Dichtring (12) in einer Ringnut (10) - aufweist.

14. Anschlussvorrichtung nach einem der Ansprüche 1 bis 13,
**dadurch gekennzeichnet, dass** das Anschlussteil (6) für die/jede Medienleitung einen Leitungsanschluss (16) aufweist.

15. Anschlussvorrichtung nach einem der Ansprüche 1 bis 14,
**dadurch gekenntzeichnet**, dass der Klemmring (14) aus einem Material besteht, das relativ zu dem Material des Aufnahmeteils (2) härter ausgebildet ist.

16. Anschlussvorrichtung nach einem der Ansprüche 1 bis 14,
**dadurch gekennzeichnet, dass** der Klemmring (14) aus einem relativ weichen, elastischen Material besteht.

17. Anschlussvorrichtung nach einem der Ansprüche 1 bis 16,
**dadurch gekennzeichnet, dass** der Einsetzabschnitt (8) des Aufnahmeteils (2) axial beschädigungs- und zerstörungsfrei aus der Anschlussöffnung (4) lösbar ist.

18. Anschlussvorrichtung nach einem der Ansprüche 1 bis 17,
**gekennzeichnet durch** Haltemittel (56) zur verliersicheren Vorfixierung des Klemmrings (14) an dem Einsetzabschnitt (8).

## Claims

1. A connection device (1) for connecting at least one media line to a receiving part (2), consisting of a connection part (6) which can be inserted with an insertion section (8) in peripherally sealed manner axially into a cylindrical or slightly conical connection opening (4) of the receiving part (2) and can be locked against axial detachment by means of holding means, the insertion section (8) bearing as holding means a clamping ring (14) which cooperates with the insertion section (8) such that it can be radially spread by an axial relative movement occurring between the insertion section (8) and clamping ring (14), and for axial locking acts in non-positive and/or positive manner radially against the connection opening (4), **characterised in that** the clamping ring (14) cooperates directly with the insertion section (8) via positive control means (24) such that the axial relative movement for spreading the clamping ring (14) is brought about by twisting the insertion section (8) relative to the clamping ring (14).

2. A connection device according to Claim 1, **characterised in that** the clamping ring (14) has on its outer periphery means for inhibiting twisting in the connection opening (4).

3. A connection device according to Claim 1 or 2, **characterised in that** the positive control means (24) provided directly between the insertion section (8) and the clamping ring (14) are in the form of a threaded connection (46).

4. A connection device according to Claim 1 or 2, **characterised in that** the positive control means (24) provided directly between the insertion section (8) and the clamping ring (14) are in the form of a cam control (26).

5. A connection device according to one of Claims 1 to 4, **characterised in that** the clamping ring (14) has an internal cone (26) which for spreading cooperates with an external cone (28) of the insertion section (8).

6. A connection device according to Claim 5, **characterised in that** the internal cone (26) of the clamping ring (14) and the external cone (28) of the insertion section (8) are formed with diameters which decrease in the direction of insertion towards a free front end (30) of the insertion section (8).

7. A connection device according to Claims 3 and 5 or according to Claims 3 and 6, **characterised in that** the threaded connection (46) is provided as a conical thread in the region of the internal cone (26) of the clamping ring (14) and of the external cone (28) of the insertion section (8).

8. A connection device according to Claims 3 and 5 or according to Claims 3 and 6, **characterised in that** the threaded connection (46) is provided as a - for example metric - cylindrical thread in a region which is offset axially - preferably in the direction of the free front end (30) - with respect to the internal cone (26) of the clamping ring (14) and the external cone (28) of the insertion section (8).

9. A connection device according to one of Claims 4 to 6, **characterised in that** the cam control (32) consists of at least one radial cam (34) - in particular arranged on the side of the insertion section (8) - and at least one cam track (36) - in particular formed on the inside in the clamping ring (14) - associated therewith which extends obliquely in the manner of a ramp.

10. A connection device according to one of Claims 2 to 9, **characterised in that** the means for inhibiting twisting are formed by at least one radially projecting and approximately axially extending rib (40) and/or by an outer, preferably elastomeric, friction coating (42).

11. A connection device according to one of Claims 1 to 10, **characterised in that** the clamping ring (14) has on its outer periphery teeth (44) which act in non-positive and/or positive manner against the connection opening (4).

12. A connection device according to one of Claims 1 to 11, **characterised in that** the clamping ring (14) has on its outer periphery a friction coating (42) for non-positive locking in the connection opening (4).

13. A connection device according to one of Claims 1 to 12, **characterised in that** the insertion section (8) for peripheral sealing has at least one sealing section, in particular at least one sealing ring (12) in a ring groove (10).

14. A connection device according to one of Claims 1 to 13, **characterised in that** the connection part (6) for the/each media line has a line connection (16).

15. A connection device according to one of Claims 1 to 14, **characterised in that** the clamping ring (14) consists of a material which is made harder relative to the material of the receiving part (2).

16. A connection device according to one of Claims 1 to 14, **characterised in that** the clamping ring (14) consists of a relatively soft, elastic material.

17. A connection device according to one of Claims 1 to 16, **characterised in that** the insertion section (8) of the receiving part (2) can be detached axially from the connection opening (4) in a non-damaging and non-destructive manner.

18. A connection device according to one of Claims 1 to 17, **characterised by** holding means (56) for pre-fixing the clamping ring (14) to the insertion section (8) so that it cannot be lost.

## Revendications

1. Dispositif de raccordement (1) pour le raccordement d'au moins une conduite de fluide à un logement (2), formé par un élément de raccordement (6), apte à être inséré axialement avec une partie d'insertion (8) de manière étanche sur tout le pourtour dans une ouverture (4) cylindrique ou faiblement conique du logement (2) et apte à être bloquée par des moyens de fixation pour empêcher une désolidarisation dans le sens axial, ladite partie d'insertion (8) portant une bague de serrage (14) formant un moyen de fixation, laquelle coopère avec la partie d'insertion (8), de telle sorte qu'elle peut être écartée radialement par un mouvement relatif axial généré entre la partie d'insertion (8) et la bague de serrage (14), et, en vue d'un blocage axial, agit radialement par un assemblage par force et/ou par conjugaison de forme contre l'ouverture (4),
**caractérisé en ce que** la bague de serrage (14) coopère directement avec la partie d'insertion (8) par l'intermédiaire de moyens de commande forcée (24), de telle sorte que le mouvement relatif axial pour l'écartement de la bague de serrage (14) est induit par une rotation de la partie d'insertion (8) par rapport à la bague de serrage (14).

2. Dispositif de raccordement selon la revendication 1, **caractérisé en ce que** la bague de serrage (14) comporte sur son pourtour extérieur des moyens pour empêcher toute rotation à l'intérieur de l'ouverture (4).

3. Dispositif de raccordement selon la revendication 1 ou 2, **caractérisé en ce que** les moyens de commande forcée (24), prévus directement entre la partie d'insertion (8) et la bague de serrage (14), sont réalisés sous la forme d'un assemblage fileté (46).

4. Dispositif de raccordement selon la revendication 1 ou 2, **caractérisé en ce que** les moyens de commande forcée (24), prévus directement entre la partie d'insertion (8) et la bague de serrage (14), sont réalisés sous la forme d'une commande à ergot (26).

5. Dispositif de raccordement selon l'une quelconque des revendications 1 à 4, **caractérisé en ce que** la bague de serrage (14) comporte un cône intérieur (26) qui, pour l'écartement de ladite bague, coopère avec un cône extérieur (28) de la partie d'insertion (8).

6. Dispositif de raccordement selon la revendication 5, **caractérisé en ce que** le cône intérieur (26) de la bague de serrage (14) et le cône extérieur (28) de la partie d'insertion (8) sont réalisés avec des diamètres diminuant dans la direction d'introduction vers une extrémité frontale (30) avant libre de la partie d'insertion (8).

7. Dispositif de raccordement selon les revendications 3 et 5 ou selon les revendications 3 et 6, **caractérisé en ce que** l'assemblage fileté (46), sous la forme d'un filetage conique, est prévu dans la zone du cône intérieur (26) de la bague de serrage (14) et du cône extérieur (28) de la partie d'insertion (8).

8. Dispositif de raccordement selon les revendications 3 et 5 ou selon les revendications 3 et 6, **caractérisé en ce que** l'assemblage fileté (46), sous la forme d'un filetage cylindrique - par exemple, métrique -, se situe dans une zone décalée axialement - de préférence vers l'extrémité frontale (30) libre - par rapport au cône intérieur (26) de la bague de serrage (14) et au cône extérieur (28) de la partie d'insertion (8).

9. Dispositif de raccordement selon l'une quelconque des revendications 4 à 6, **caractérisé en ce que** la commande à ergot (32) est formée par au moins un ergot (34) radial - disposé en particulier sur le côté de la partie d'insertion (8) - et par au moins une glissière (36) s'étendant en oblique en forme de rampe - formée en particulier sur la face intérieure dans la bague de serrage (14) - et associée audit ergot.

10. Dispositif de raccordement selon l'une quelconque des revendications 2 à 9, **caractérisé en ce que** les moyens empêchant la rotation sont formés par au moins une nervure (40) en saillie radiale et s'étendant sensiblement dans le sens axial et/ou par un revêtement de frottement (42) extérieur, de préférence élastomère.

11. Dispositif de raccordement selon l'une quelconque des revendications 1 à 10, **caractérisé en ce que** la bague de serrage (14) sur son pourtour extérieur comporte une denture (44) agissant à la manière d'un assemblage à force et/ou par conjugaison de forme contre l'ouverture (4).

12. Dispositif de raccordement selon l'une quelconque des revendications 1 à 11, **caractérisé en ce que** la bague de serrage (14) sur son pourtour extérieur comporte un revêtement de frottement (42) pour un blocage par force dans l'ouverture (4).

13. Dispositif de raccordement selon l'une quelconque des revendications 1 à 12, **caractérisé en ce que** la partie d'insertion (8), pour son étanchéité périphérique, comporte au moins une zone d'étanchéité - en particulier au moins une bague d'étanchéité (12) dans une rainure annulaire (10).

14. Dispositif de raccordement selon l'une quelconque des revendications 1 à 13, **caractérisé en ce que** l'élément de raccordement (6) comporte un branchement (16) pour la ou chaque conduite de fluide.

15. Dispositif de raccordement selon l'une quelconque des revendications 1 à 14, **caractérisé en ce que** la bague de serrage (14) est réalisée dans un matériau qui est plus dur que le matériau du logement (2).

16. Dispositif de raccordement selon l'une quelconque des revendications 1 à 14, **caractérisé en ce que** la bague de serrage (14) est réalisée dans un matériau élastique, relativement mou.

17. Dispositif de raccordement selon l'une quelconque des revendications 1 à 16, **caractérisé en ce que** la partie d'insertion (8) du logement (2) peut être retirée axialement hors de l'ouverture (4) sans endommagement et sans perturbation.

18. Dispositif de raccordement selon l'une quelconque des revendications 1 à 17, **caractérisé par** des moyens de fixation (56) pour la fixation préalable et imperdable de la bague de serrage (14) sur la partie d'insertion (8).
